# EUROPEAN PATENT SPECIFICATION

(11) **EP 2 778 873 B1**
(45) Date of publication and mention of the grant of the patent: **16.10.2019**
(21) Application number: 13159460.8
(22) Date of filing: 15.03.2013
(51) Int. Cl.: G06F 3/0484, G06F 17/24, G06F 17/21, G06F 17/25

(54) **SYSTEM AND METHOD FOR TEXT EDITOR TEXT ALIGNMENT CONTROL**
SYSTEM UND VERFAHREN FÜR DIE TEXTEDITOR-TEXTAUSRICHTUNGSSTEUERUNG
SYSTÈME ET PROCÉDÉ DE COMMANDE D'ALIGNEMENT DE TEXTE D'ÉDITEUR DE TEXTE

(43) Date of publication of application: 17.09.2014
(73) Proprietor: BlackBerry Limited, Waterloo, ON N2K 0A7 (CA)
(72) Inventor: Dent, Terrill Mark, Waterloo, Ontario N2L 3W8 (CA)
(74) Representative: Hanna Moore + Curley

(56) References cited:
- EP-A1- 2 498 175
- US-A- 5 630 080
- US-A- 5 760 773
- US-A1- 2006 036 946
- US-A1- 2009 228 792
- US-A1- 2009 249 239

## Description

### FIELD

Example embodiments disclosed herein relate generally to text alignment methodologies for electronic devices, such as handheld electronic devices, and more particularly, to systems and methods for modifying the alignment of a block of text based on an alignment control interface.

### BACKGROUND

Electronic devices, such as computers, laptops, ultrabooks, netbooks, tablets, cellular phones, smart phones, personal digital assistants, etc., typically allow a user to input characters into a text editing application, such as a word processor, e-mail application, or HTML editor. A text editing application can allow a user to modify the alignment and position of a block of text, such as a sentence, heading, or paragraph. Modifying the alignment or position of text blocks can be a cumbersome task, due to, for example, the position or layout of controls in a text editing application, particularly where a user needs to quickly and efficiently modify the alignment or position of text blocks. US published patent application US 2006/0036946 A1 (Radtke et al) 16 February 2006 discloses a floating command object that can be displayed in close proximity to a text object to allow selection of relevant formatting commands. US published patent application US 5,760,773 (Berman et al) 2 June 1998 discloses an interface in which command are effectuated by the dragging of action handles.

### BRIEF DESCRIPTION OF THE DRAWINGS

**Fig. 1** is an example block diagram illustrating an electronic device, consistent with embodiments disclosed herein.
**Fig. 2** is a flowchart illustrating an example method for modifying the alignment of a block of text based on an alignment control interface, consistent with embodiments disclosed herein.
**Fig. 3** is a flowchart illustrating an example method for modifying the position of a block of text based on a float control interface, consistent with embodiments disclosed herein.
**Fig. 4** illustrates example alignments of a block of text and example positions of an alignment control interface, consistent with embodiments disclosed herein.
**Figs. 5A****,** **5B****,** **5C****,** **5D****, and** **5E** illustrate example positions of a block of text, consistent with embodiments disclosed herein.
**Figs. 6A****,** **6B****, and** **6C** illustrate example alignments and positions of a block of text, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device. The electronic device can be a mobile or handheld wireless communication device such as a cellular phone, smart phone, wireless organizer, personal digital assistant, wirelessly enabled notebook computer, tablet, or similar device. The electronic device can also be an electronic device without wireless communication capabilities, such as a desktop computer, handheld electronic game device, digital photograph album, digital camera, or other device.

Conventional text editing applications often provide a fixed toolbar in one region of the display that includes an arrangement of several buttons related to text alignment, such as "left alignment," "center alignment," "right alignment," and "justified." In a text editing application, however, it is often preferable to preserve space for writing and avoid using space for objects such as fixed toolbars and buttons. Additionally, it is often desirable to place editing controls in close proximity to the element that they act upon. This may result in less movement and a higher degree of association between action (e.g., selecting an alignment option) and result (e.g., seeing the result of the selection), while permitting the user to modify the alignment or position of text blocks without diverting attention and visual focus from regions of the display in which the text blocks are displayed.

Accordingly, example embodiments described herein permit the user of an electronic device to modify the alignment and position of text blocks through user-selectable control interfaces placed in proximity to the text blocks.

Use of the indefinite article "a" or "an" in the specification and the claims is meant to include one or more than one of the feature that it introduces, unless otherwise indicated. Similarly, use of the definite article "the," particularly after a feature has been introduced with the indefinite article, is meant to include one or more than one of the feature to which it refers (unless otherwise indicated).

In one example embodiment, a method for an electronic device having an input device and a display is provided. The method comprises displaying, in proximity of the block of text, an alignment control interface after a precondition is met, detecting a dragging motion associated with the alignment control interface, modifying an alignment of the block of text based, at least in part, on the detected dragging motion, detecting an end of the dragging motion, and, displaying, in a predetermined position associated with the alignment of the block of text, the alignment control interface.

In another example embodiment, a method for an electronic device having an input device and a display is provided. The method comprises displaying a block of text within a text editing application, displaying, in proximity of the block of text, a float control interface after a precondition is met, detecting a dragging motion associated with the float control interface, modifying a position of the block of text based, at least in part, on the detected dragging motion, detecting an end of the dragging motion, and, displaying, in a predetermined position associated with the position of the block of text, the float control interface.

In another example embodiment, an electronic device is provided. The electronic device comprises a display configured to display characters, an input device, a memory storing one or more instructions, and a processor. The processor is configured to execute the one or more instructions to perform: displaying, in proximity of the block of text, an alignment control interface after a precondition is met, detecting a dragging motion associated with the alignment control interface, modifying an alignment of the block of text based, at least in part, on the detected dragging motion, detecting an end of the dragging motion, and, displaying, in a predetermined position associated with the alignment of the block of text, the alignment control interface.

In another example embodiment, an electronic device is provided. The electronic device comprises a display configured to display characters, an input device, a memory storing one or more instructions, and a processor. The processor is configured to execute the one or more instructions to perform: displaying a block of text within a text editing application, displaying, in proximity of the block of text, a float control interface after a precondition is met, detecting a dragging motion associated with the float control interface, modifying a position of the block of text based, at least in part, on the detected dragging motion, detecting an end of the dragging motion, and, displaying, in a predetermined position associated with the position of the block of text, the float control interface.

These example embodiments, in addition to those described below, permit, for example, the user of an electronic device to modify the alignment and position of text blocks through the use of control interfaces placed in proximity to the text blocks, without diverting attention and visual focus from the regions of the display in which the text blocks are positioned. This may result in less movement and a higher degree of association between the user's action and the result, while allowing the user's focus to remain on the regions of the display in which the text blocks are positioned, enhancing efficiency, accuracy, and speed of character input and text block modification.

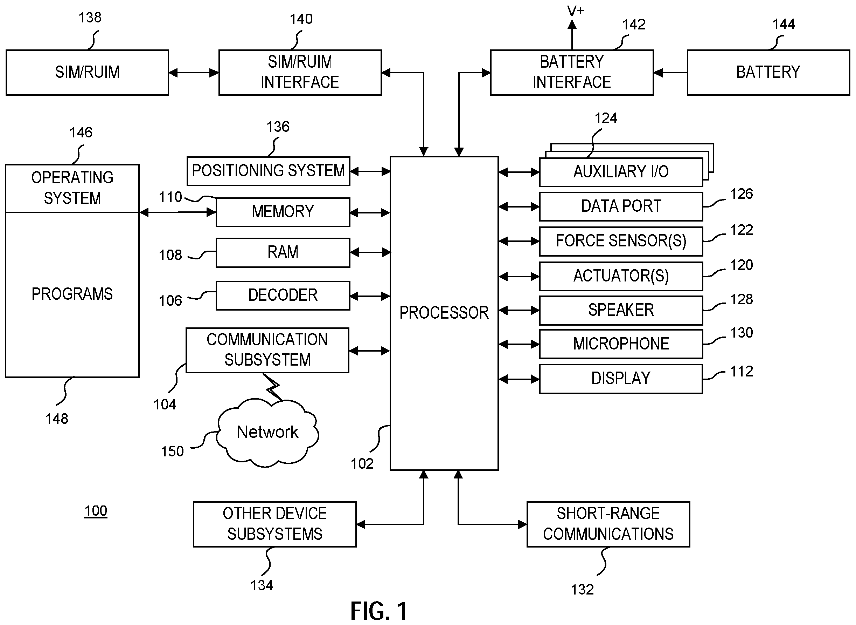

**Figure 1** is an example block diagram of an electronic device 100, consistent with example embodiments disclosed herein. Electronic device 100 includes multiple components, such as a processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144. In some embodiments, electronic device 100 can be a computer, laptop, ultrabook, netbook, or table device, or another device, and such an electronic device can include all or a subset of the components illustrated in **Figure 1****.** The choice of components included in electronic device 100 is not critical to any embodiment.

Processor 102 is coupled to and can interact with additional subsystems such as a Random Access Memory (RAM) 108; a memory 110, such as a hard drive, CD, DVD, flash memory, or a similar storage device; one or more displays 112; one or more actuators 120; one or more force sensors 122; an auxiliary input/output (I/O) subsystem 124; a data port 126; one or more speakers 128; one or more microphones 130; short-range communications 132; and other device subsystems 134.

Display 112 is coupled to and controlled by processor 102. Characters, such as text, symbols, images, and other items are displayed on display 112 via processor 102. Characters can be input into the electronic device 100 using a keyboard (not pictured in **Figure 1****),** such as a physical keyboard having keys that are mechanically actuated, or a virtual keyboard having keys rendered on display 112.

Processor 102 can also interact with a positioning system 136 for determining the location of electronic device 100. The location can be determined in any number of ways, such as by a computer, by a Global Positioning System (GPS) (which can be included in electronic device 100), through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by processor 102 and are typically stored in memory 110 or RAM 108. Additional applications can be loaded onto electronic device 100 through network 150, auxiliary I/O subsystem 124, data port 126, short-range communications subsystem 132, or any other suitable subsystem.

A received signal such as a text message, an e-mail message, or a web page download is processed by communication subsystem 104. This processed information is then provided to processor 102. Processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

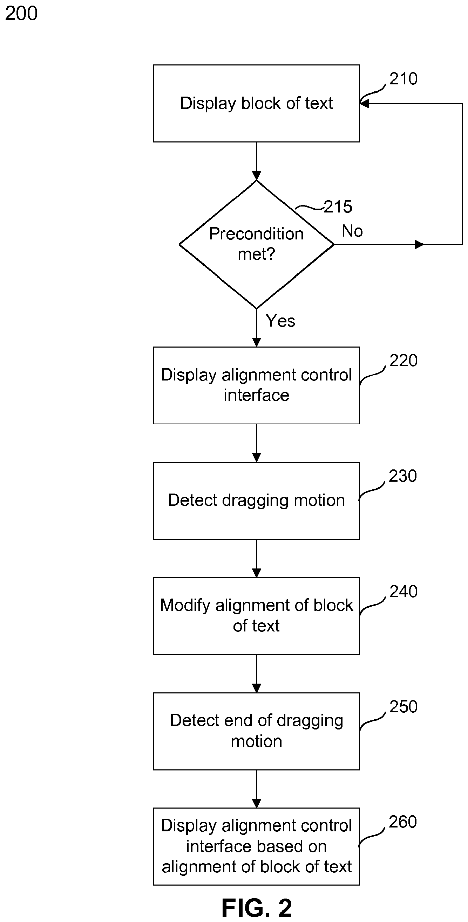

**Figure 2** is an example flowchart illustrating an example method 200 for modifying the alignment of a block of text based on an alignment control interface, consistent with example embodiments disclosed herein. Memory (such as memory 108 or RAM 110) can include a set of instructions that, when executed by a processor (such as processor 102), can be used to modify the alignment of a block of text based on an alignment control interface.

Referring back to **Figure 2****,** method 200 begins at step 210, where the processor 102 displays a block of text within a text editing application. In some embodiments, the processor 102 receives an input reflecting placement of a caret in, or near, a block of text within a text editing application. A caret refers to a cursor (e.g., a blinking cursor) or other symbol indicating a position for inserting or removing text. A block of text refers to a character, word, sentence, heading, paragraph, or other unit or units of text. At step 215, the processor 102 checks whether a precondition is met. For example, the processor 102 may check whether, during a specified time period, an input is received reflecting placement of a caret in, or near, a block of text, an input is received changing placement of the caret, a character input is received, and/or an input is detected reflecting selection of an application outside of the text editing application. A text editing application can include, for example, a word processor, an e-mail application, or a HTML editor. In some embodiments, the processor 102 determines that the precondition is met unless any of the above-described instances occur. The specified time period can vary in duration; exemplary durations include 300 milliseconds and 500 milliseconds. One advantage of implementing such a precondition includes avoidance of a "flicker" effect, in which a component of a user interface is shown and hidden repeatedly, which can have the effect of cluttering the display and/or distracting a user. Returning back to **Figure 2****,** if at step 215 the processor 102 determines that the precondition is not met, the method returns to step 210. Otherwise, the processor 102 continues on to step 220.

At step 220, the processor 102 displays an alignment control interface in proximity to the block of text. The alignment control interface can be a user-selectable visual element. In some embodiments, the alignment control interface visually indicates the present alignment of the block of text by, for instance, displaying horizontal lines corresponding to the different alignment options. The alignment control interface can be referred to as a "grip" or simply as a "control interface." As an example, the alignment control interface can be displayed adjacent to, above, below, or within (e.g., layered in) a block of text. In some embodiments, the alignment control interface can be positioned horizontally based on the present alignment of the block of text. For example, if the present alignment of the block of text is "left aligned," the horizontal position of the alignment control interface can correspond to the left region of the block of text. Conversely, if the present alignment of the block of text is "centered" or "right aligned," the alignment interface control can be horizontally positioned within the middle and right regions of the block of text, respectively. In some embodiments, the alignment control interface can be positioned vertically according to the top of the block of text. The alignment control interface can appear as shown in the exemplary interfaces 410, 420, and 430, of
**Figure 4****.**

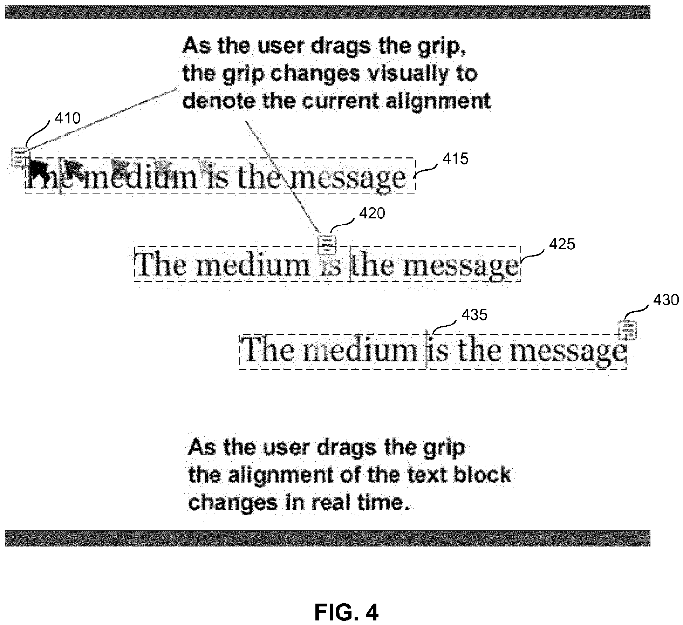

The processor 102 detects a dragging motion associated with the alignment control interface at step 230. A dragging motion can include, for example, a click of the alignment control interface followed by a drag motion, or another action, in which the position of the alignment control interface is incrementally repositioned on the display. In some embodiments, the alignment control interface is not repositioned on the display until the user completes the click and drag motion described above, or otherwise releases control over the alignment control interface. The dragging motion can be executed, for example, through use of a mouse or other mechanical input device, as well as through touch motions (e.g., a swiping motion) on a touch-sensitive display. After detecting the dragging motion at step 230, the processor 102 at step 240 modifies the alignment of the block of text based, at least in part, on the dragging motion. In some embodiments, the processor modifies the alignment of the block of text, in real time, based on the position of the alignment control interface. For example, the alignment of the block of text can be based on the position of the alignment control interface relative to the block of text. In some embodiments, the alignment control interface is dragged horizontally across the display. As the alignment control interface is dragged from left to right or from right to left, the alignment of the block of text is set depending on the horizontal position of the alignment control interface. When the horizontal position of the alignment control interface is in the left region of the block of text, for example, the alignment of the block of text is set to "left aligned." Conversely, when the horizontal position of the alignment control interface is in the middle or right regions of the block of text, the alignment of the block of text is set to "centered" and "right aligned," respectively. This is further demonstrated by the exemplary interfaces 410, 420, and 430, and exemplary text blocks 415, 425, and 435, as illustrated in **Figure 4****.** In some embodiments, "leading" and "trailing" alignments can be triggered by dragging the alignment control interface into either one of the edges of the display (e.g., into the margins in a text editing application). Various partitions of the block of text into left, middle, and right regions are possible; the choice of a particular partition is not critical to any embodiment.

At step 250, the processor 102 detects an end of the dragging motion. After detecting the end of the dragging motion, the processor 102 at step 260 displays the alignment control interface in a predetermined position associated with the alignment of the block of text. If the alignment of the block of text is set to "right aligned," for example, the alignment interface control may be displayed within the right region of the display. Conversely, if the alignment of the block of text is set to "centered" or "left aligned," the alignment interface control may be displayed within the middle and left regions of the display, respectively. This is further demonstrated by the exemplary interfaces 410, 420, and 430, and exemplary text blocks 415, 425, and 435, as illustrated in **Figure 4****.** In some embodiments, the alignment control interface animates or "snaps into place" in the appropriate region of the display.

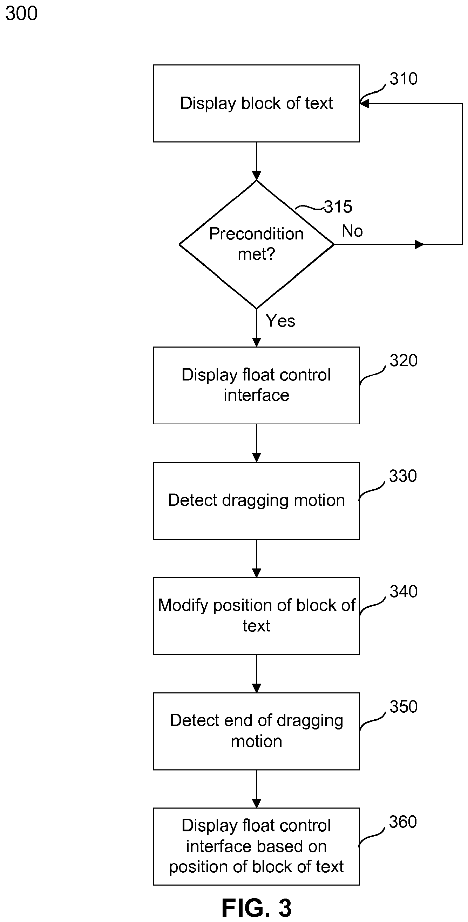

**Figure 3** is an example flowchart illustrating an example method 300 in accordance with some example embodiments. Memory (such as memory 108 or RAM 110) can include a set of instructions that, when executed by a processor (such as processor 102), can be used to implement the steps of method 300. At step 310, the processor 102 displays a block of text within a text editing application. In some embodiments, the processor 102 receives an input reflecting placement of a caret in, or near, a block of text within a text editing application. At step 315, the processor 102 checks whether a precondition is met. For example, the processor 102 can check whether, during a specified time period, an input is received reflecting placement of a caret in, or near, a block of text, an input is received changing placement of the caret, a character input is received, and/or an input is detected reflecting selection of an application outside of the text editing application. In some embodiments, the processor 102 determines that the precondition is met unless any of the above-described instances occur. The specified time period can vary in duration; exemplary durations include 300 milliseconds and 500 milliseconds. Returning back to **Figure 3****,** if at step 315 the processor 102 determines that the precondition is not met, the method returns to step 310. Otherwise, the processor 102 continues on to step 320.

At step 320, the processor 102 displays a float control interface in proximity of the block of text. The alignment control interface can be a user-selectable visual element. For example, the float control interface can be displayed adjacent to, above, below, or within (e.g., layered in) a block of text. The processor 102 detects a dragging motion associated with the float control interface at step 330. A dragging motion can include, for example, a click and drag motion, or another action, in which the position of the float control interface is incrementally repositioned on the display. In some embodiments, the float control interface is not repositioned on the display until the user completes the click and drag motion described above, or otherwise releases control over the float control interface. The dragging motion can be executed, for example, through use of a mouse or other mechanical input device, as well as through touch motions (e.g., a swiping motion) on a touch-sensitive display. After detecting the dragging motion at step 230, the processor 102 at step 240 modifies the alignment of the block of text based, at least in part, on the dragging motion. In some embodiments, the processor modifies the alignment of the block of text, in real time, based on the position of the alignment control interface. For example, the block of text can be positioned according to the horizontal position of the float control interface. In some embodiments, the float control interface is dragged horizontally across the display. As the float control interface is dragged from left to right or from right to left, the position of the block of text is set depending on the horizontal position of the float control interface. When the horizontal position of the float control interface is in the left region of the display, for example, the block of text is also positioned in the left region of the display. Conversely, when the horizontal position of the float control interface is in the middle or right regions of the display, the block of text is positioned in the middle and right regions of the display, respectively.

At step 350, the processor 102 detects an end of the dragging motion. After detecting the end of the dragging motion, the processor 102 at step 360 displays the float control interface in a predetermined position associated with the position of the block of text. If the block of text is positioned in the left region of the display, for example, the float interface control may be displayed within the left region of the display. Conversely, if the block of text is positioned in the middle or right regions of the display, the float interface control may be displayed within the middle and right regions of the display, respectively. In some embodiments, the float control interface animates or "snaps into place" in the appropriate region of the display.

**Figure 4** illustrates example alignments of a block of text and example positions of an alignment control interface, consistent with embodiments disclosed herein. **Figure 4** includes alignment control interfaces 410, 420, and 430, and text blocks 415, 425, and 435. As shown in **Figure 4****,** alignment control interface 410 is displayed at the top left of text block 415, which corresponds to the left alignment of text block 415. In addition, the visual appearance of alignment control interface 410 depicts the left alignment of text block 415. As demonstrated in **Figure 4****,** when alignment control interface 410 is dragged from left to right (or from right to left), the alignment of the text block is also modified. Alignment control interface 420 is displayed in the middle of text block 425, which corresponds to the center alignment of text block 425 (also visually depicted in alignment control interface 420). And alignment control interface 430 is displayed at the top right of text block 435, which corresponds to the right alignment of text block 435 (also visually depicted in alignment control interface 430).

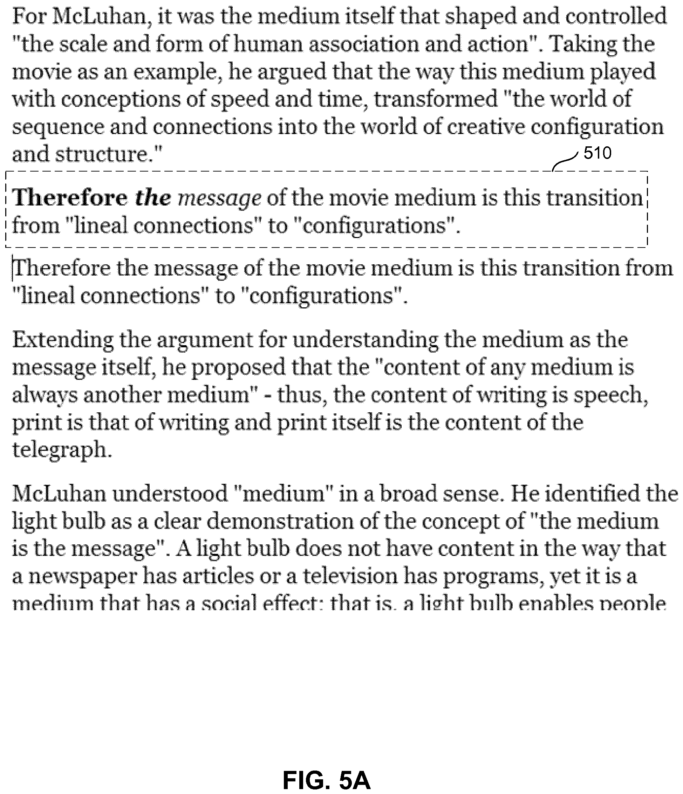

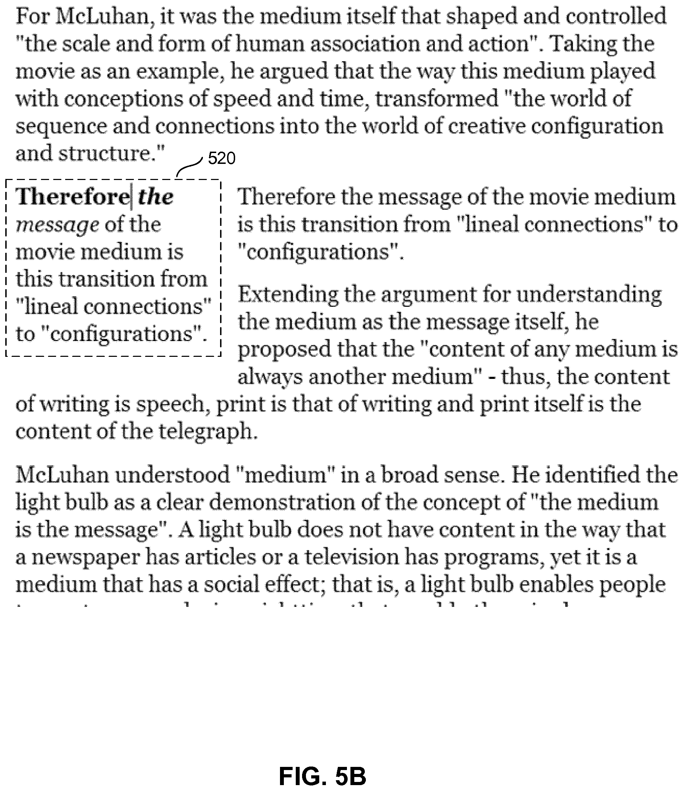

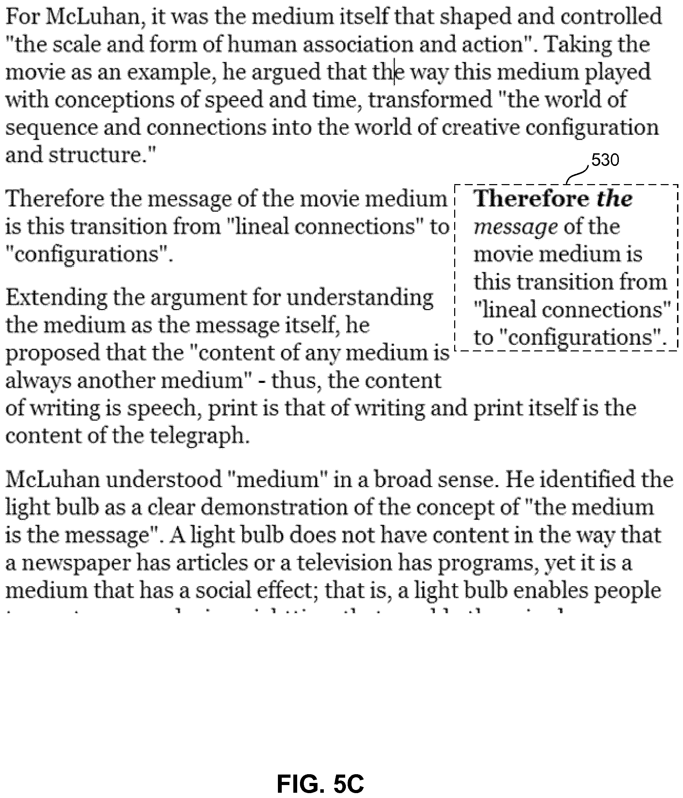

**Figures 5A****,** **5B****,** and **5C** illustrate example positions of a block of text, consistent with embodiments disclosed herein. **Figures 5A****,** **5B****,** and **5C** illustrate various positions of the text block, after the position of the text block has been modified using the methods described in connection with **Figure 3****,** above. As shown in **Figure 5A****,** for example, text block 510 is positioned as "float center." In some embodiments, this can also be referred to as a default position. In contrast, text block 520 of **Figure 5B** is positioned as "float left," whereas text block 530 of **Figure 5C** is positioned as "float right." As **Figures 5B** and **5C** illustrate, positioning a text block as "float left" or "float right" can result in neighboring text blocks being repositioned relative to the original text block.

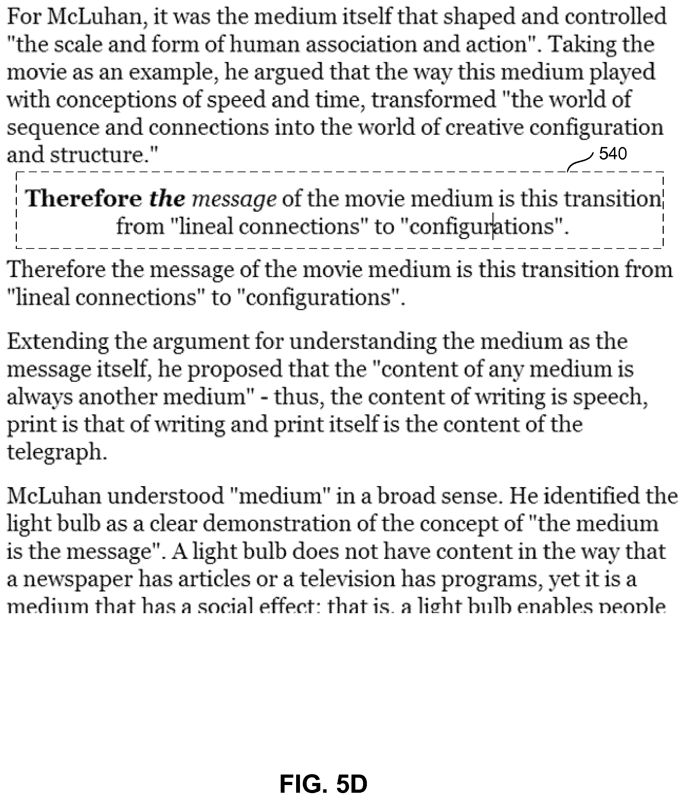

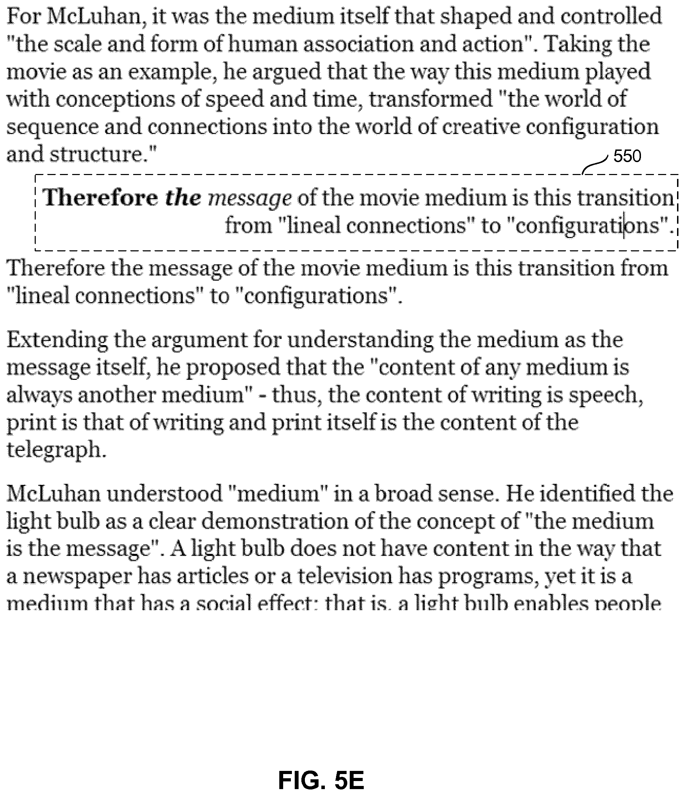

Similarly, **Figures 5A****,** **5D****,** and **5E** illustrate additional example positions of a block of text, consistent with embodiments disclosed herein. More specifically, **Figures 5A****,** **5D****,** and **5E** illustrate various positions of the text block, after the position of the text block has been modified using the methods described in connection with **Figure 2****,** above. Text blocks 510, 540, and 550 of **Figures 5A****,** **5D****,** and **5E** are positioned as "float center" or a default position, as described above. Furthermore, in these examples, text block 510 has been set to "left aligned," text block 540 has been set to "center aligned," and text block 550 has been set to "right aligned."

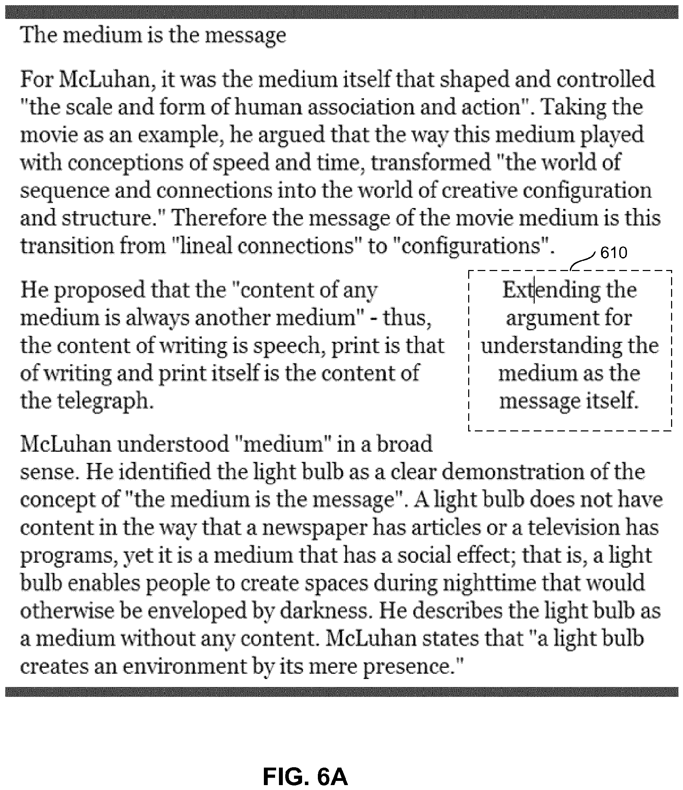

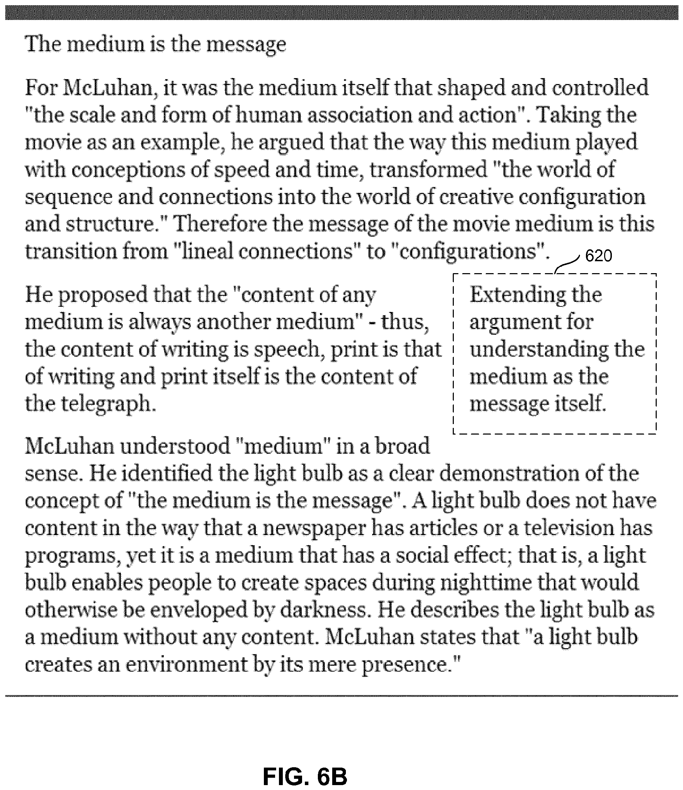

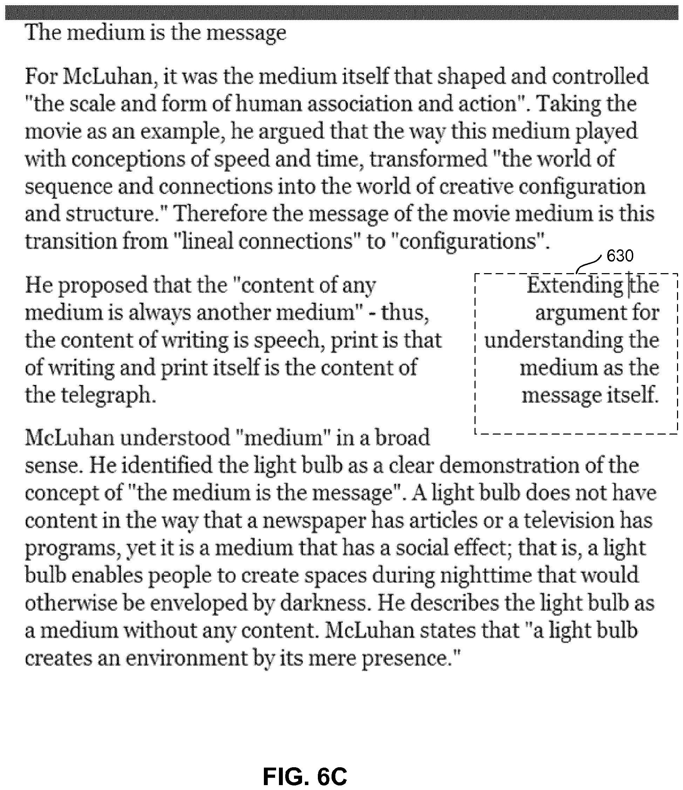

**Figures 6A****,** **6B****,** and **6C** show example alignments and positions of a block of text, consistent with embodiments disclosed herein. **Figures 6A****,** **6B****,** and **6C** illustrate various alignments of the text block, after the alignment of the text block has been modified using the methods described in connection with **Figure 2****,** above. In addition, text blocks 610, 620, and 630 of **Figures 6A****,** **6B****,** and **6C** are positioned as "float right" which, as described above, indicates that the neighboring text blocks have been repositioned relative to text blocks 610, 620, and 630. Furthermore, in these examples, text block 610 has been set to "center aligned," text block 620 has been set to "left aligned," and text block 630 has been set to "right aligned." **Figures 6A****,** **6B****,** and **6C** demonstrate the joint use of alignment control and float control on a given block of text.

Other embodiments of the invention will be apparent to those skilled in the art from consideration of the specification and practice of the invention disclosed herein. It is intended that the specification and examples be considered as examples only, with a true scope of the invention being indicated by the following claims.

## Claims

1. A method for an electronic device (100) having an input device and a display (112), the method comprising:
displaying a block of text within a text editing application;
displaying, in proximity of the block of text, an alignment control interface or a float control interface after a precondition is met;
detecting a dragging motion associated with the alignment control interface or the float control interface, the dragging motion changing a position of the alignment control interface or the float control interface relative to the block of text;
modifying an alignment or position of the block of text based, at least in part, on the detected dragging motion, wherein the modifying of the alignment of the block of text based on the detected dragging motion comprises modifying the alignment of the block of text based on the position of the alignment control interface relative to the block of text and wherein modifying the position of the block of text based on the detected dragging motion comprises modifying the position of the block of text based on the position of the float control interface relative to the display;
detecting an end of the dragging motion; and
displaying, in a predetermined position associated with the alignment or position of the block of text, the alignment control interface or the float control interface.

2. The method of claim 1, wherein the precondition is met, unless, during a predetermined time period, one of the following occurs:
receiving an input reflecting placement of a caret in a block of text;
receiving an input reflecting repositioning of the caret;
receiving a character input; or
detecting an input reflecting selection of an application outside of the text editing application.

3. The method of claim 2, wherein the predetermined time period is 300 milliseconds.

4. The method of any preceding claim, wherein modifying the alignment of the block of text comprises setting the alignment of the block of text to be left aligned, centered, or right aligned.

5. The method of any preceding claim, wherein modifying the position of the block of text comprises setting the block of text to be float left, float center, or float right.

6. A computer program which when executed by at least one processor of an electronic device (100) having an input device and a display (112),is configured to perform the method according to any one of claims 1 to 5.

7. An electronic device (100) comprising:
a display (112), configured to display characters;
an input device;
a memory (110) storing one or more instructions; and
a processor (102) configured to execute the one or more instructions to perform operations comprising:
displaying a block of text within a text editing application;
displaying, in proximity of the block of text, an alignment control interface or a float control interface after a precondition is met;
detecting a dragging motion associated with the alignment control interface or float control interface , the dragging motion changing a position of the alignment control interface or the float control interface relative to the block of text;
modifying an alignment or position of the block of text based, at least in part, on the detected dragging motion, wherein the modifying of the alignment of the block of text based on the detected dragging motion comprises modifying the alignment of the block of text based on the position of the alignment control interface relative to the block of text and wherein modifying the position of the block of text based on the detected dragging motion comprises modifying the position of the block of text based on the position of the float control interface relative to the display;
detecting an end of the dragging motion; and
displaying, in a predetermined position associated with the alignment or position of the block of text, the alignment control interface or float control interface.

8. The electronic device of claim 7, wherein the precondition is met, unless, during a predetermined time period, one of the following occurs:
receiving an input reflecting placement of a caret in a block of text;
receiving an input reflecting repositioning of the caret;
receiving a character input; or
detecting an input reflecting selection of an application outside of the text editing application.

9. The electronic device of claim 8, wherein the predetermined time period is 300 milliseconds.

10. The electronic device of any of claims 7 to 9, wherein modifying the alignment of the block of text comprises setting the alignment of the block of text to be left aligned, centered, or right aligned.

11. The electronic device of any of claims 7 to 10, wherein modifying the position of the block of text comprises setting the block of text to be float left, float center, or float right.

## Patentansprüche

1. Verfahren für eine elektronische Vorrichtung (100), die eine Eingabevorrichtung und eine Anzeige (112) aufweist, das Verfahren umfassend:
Anzeigen eines Textblocks innerhalb einer Textbearbeitungsanwendung;
Anzeigen einer Ausrichtungssteuerungsschnittstelle oder einer Float-Steuerungsschnittstelle in der Nähe des Textblocks, nachdem eine Vorbedingung erfüllt wurde;
Erkennen einer Ziehbewegung, die der Ausrichtungssteuerungsschnittstelle oder der Float-Steuerungsschnittstelle zugeordnet ist, wobei die Ziehbewegung eine Position der Ausrichtungssteuerungsschnittstelle oder der Float-Steuerungsschnittstelle relativ zu dem Textblock verändert;
Verändern einer Ausrichtung oder Position des Textblocks basierend zumindest teilweise auf der erkannten Ziehbewegung, wobei das Verändern der Ausrichtung des Textblocks basierend auf der erkannten Ziehbewegung das Verändern der Ausrichtung des Textblocks basierend auf der Position der Ausrichtungssteuerungsschnittstelle relativ zu dem Textblock umfasst und wobei das Verändern der Position des Textblocks basierend auf der erkannten Ziehbewegung das Verändern der Position des Textblocks basierend auf der Position der Float-Steuerungsschnittstelle relativ zu der Anzeige umfasst;
Erkennen eines Endes der Ziehbewegung; und
Anzeigen der Ausrichtungssteuerungsschnittstelle oder der Float-Steuerungsschnittstelle in einer vorbestimmten Position, die der Ausrichtung oder Position des Textblocks zugeordnet ist.

2. Verfahren nach Anspruch 1, wobei die Vorbedingung erfüllt ist, sofern nicht während einer vorbestimmten Zeitdauer eines des Folgenden erfolgt:
Empfangen einer Eingabe, die eine Platzierung eines Caret-Zeichens in einem Textblock widerspiegelt;
Empfangen einer Eingabe, die eine Neupositionierung des Caret-Zeichens widerspiegelt;
Empfangen einer Zeicheneingabe; oder
Erkennen eine Eingabe, die eine Auswahl einer Anwendung außerhalb der Textbearbeitungsanwendung widerspiegelt.

3. Verfahren nach Anspruch 2, wobei die vorbestimmte Zeitdauer 300 Millisekunden beträgt.

4. Verfahren nach einem vorhergehenden Anspruch, wobei das Verändern der Ausrichtung des Textblocks das Einstellen der Ausrichtung des Textblocks als linksbündig, zentriert oder rechtsbündig umfasst.

5. Verfahren nach einem vorhergehenden Anspruch, wobei das Verändern der Position des Textblocks das Einstellen des Textblocks als links gefloatet, mittig gefloatet oder rechts gefloatet umfasst.

6. Computerprogramm, das bei Ausführung durch mindestens einen Prozessor einer elektronischen Vorrichtung (100), die eine Eingabevorrichtung und eine Anzeige (112) aufweist, konfiguriert ist, um das Verfahren nach einem der Ansprüche 1 bis 5 durchzuführen.

7. Elektronische Vorrichtung (100), umfassend:
eine Anzeige (112), die konfiguriert ist, um Zeichen anzuzeigen;
eine Eingabevorrichtung;
einen Speicher (110), der eine oder mehrere Anweisungen speichert; und
einen Prozessor (102), der konfiguriert ist, um die eine oder die mehreren Anweisungen auszuführen, um Operationen durchzuführen, die umfassen:
Anzeigen eines Textblocks innerhalb einer Textbearbeitungsanwendung;
Anzeigen einer Ausrichtungssteuerungsschnittstell e oder einer Float-Steuerungsschnittstelle in der Nähe des Textblocks, nachdem eine Vorbedingung erfüllt wurde;
Erkennen einer Ziehbewegung, die der Ausrichtungssteuerungsschnittstell e oder der Float-Steuerungsschnittstelle zugeordnet ist, wobei die Ziehbewegung eine Position der Ausrichtungssteuerungsschnittstell e oder der Float-Steuerungsschnittstelle relativ zu dem Textblock verändert;
Verändern einer Ausrichtung oder Position des Textblocks basierend zumindest teilweise auf der erkannten Ziehbewegung, wobei das Verändern der Ausrichtung des Textblocks basierend auf der erkannten Ziehbewegung das Verändern der Ausrichtung des Textblocks basierend auf der Position der Ausrichtungssteuerungsschnittstell e relativ zu dem Textblock umfasst und wobei das Verändern der Position des Textblocks basierend auf der erkannten Ziehbewegung das Verändern der Position des Textblocks basierend auf der Position der Float-Steuerungsschnittstelle relativ zu der Anzeige umfasst;
Erkennen eines Endes der Ziehbewegung; und
Anzeigen der Ausrichtungssteuerungsschnittstell e oder der Float-Steuerungsschnittstelle in einer vorbestimmten Position, die der Ausrichtung oder Position des Textblocks zugeordnet ist.

8. Elektronische Vorrichtung nach Anspruch 7, wobei die Vorbedingung erfüllt ist, sofern nicht während einer vorbestimmten Zeitdauer eines des Folgenden erfolgt:
Empfangen einer Eingabe, die eine Platzierung eines Caret-Zeichens in einem Textblock widerspiegelt;
Empfangen einer Eingabe, die eine Neupositionierung des Caret-Zeichens widerspiegelt;
Empfangen einer Zeicheneingabe; oder
Erkennen eine Eingabe, die eine Auswahl einer Anwendung außerhalb der Textbearbeitungsanwendung widerspiegelt.

9. Elektronische Vorrichtung nach Anspruch 8, wobei die vorbestimmte Zeitdauer 300 Millisekunden beträgt.

10. Elektronische Vorrichtung nach einem der Ansprüche 7 bis 9, wobei das Verändern der Ausrichtung des Textblocks das Einstellen der Ausrichtung des Textblocks als linksbündig, zentriert oder rechtsbündig umfasst.

11. Elektronische Vorrichtung nach einem der Ansprüche 7 bis 10, wobei das Verändern der Position des Textblocks das Einstellen des Textblocks als links gefloatet, mittig gefloatet oder rechts gefloatet umfasst.

## Revendications

1. Procédé pour un dispositif électronique (100) ayant un dispositif d'entrée et un dispositif d'affichage (112), le procédé comprenant :
afficher un bloc de texte dans une application d'édition de texte ;
afficher, à proximité du bloc de texte, une interface de commande d'alignement ou une interface de commande de flottement une fois qu'une précondition est satisfaite ;
détecter un mouvement de glissement associé à l'interface de commande d'alignement ou à l'interface de commande de flottement, le mouvement de glissement changeant une position de l'interface de commande d'alignement ou de l'interface de commande de flottement par rapport au bloc de texte ;
modifier un alignement ou une position du bloc de texte sur la base, au moins en partie, du mouvement de glissement détecté, la modification de l'alignement du bloc de texte sur la base du mouvement de glissement détecté comprenant la modification de l'alignement du bloc de texte sur la base de la position de l'interface de commande d'alignement par rapport au bloc de texte, et la modification de la position du bloc de texte sur la base du mouvement de glissement détecté comprenant la modification de la position du bloc de texte sur la base de la position de l'interface de commande de flottement par rapport à au dispositif d'affichage ;
détecter une fin du mouvement de glissement ; et
afficher, dans une position prédéterminée associée à l'alignement ou à la position du bloc de texte, l'interface de commande d'alignement ou l'interface de commande de flottement.

2. Procédé selon la revendication 1, dans lequel la précondition est satisfaite, sauf si, pendant une période de temps prédéterminée, l'une des opérations suivantes se produit :
recevoir une entrée reflétant le placement d'un signe d'intercalage dans un bloc de texte ;
recevoir une entrée reflétant le repositionnement du signe d'intercalage ;
recevoir une entrée de caractère ; ou
détecter une entrée reflétant la sélection d'une application en dehors de l'application d'édition de texte.

3. Procédé selon la revendication 2, dans lequel la période de temps prédéterminée est de 300 millisecondes.

4. Procédé selon l'une quelconque des revendications précédentes, dans lequel la modification de l'alignement du bloc de texte comprend le réglage de l'alignement du bloc de texte pour être aligné à gauche, centré ou aligné à droite.

5. Procédé selon l'une quelconque des revendications précédentes, dans lequel la modification de la position du bloc de texte comprend le réglage du bloc de texte pour être en flottement à gauche, en flottement au centre ou en flottement à droite.

6. Programme d'ordinateur qui, lorsqu'il est exécuté par au moins un processeur d'un dispositif électronique (100) ayant un dispositif d'entrée et un dispositif d'affichage (112), est configuré pour réaliser le procédé selon l'une quelconque des revendications 1 à 5.

7. Dispositif électronique (100) comprenant :
un dispositif d'affichage (112), configuré pour afficher des caractères ;
un dispositif d'entrée ;
une mémoire (110) stockant une ou plusieurs instructions ; et
un processeur (102) configuré pour exécuter la ou les instructions afin de réaliser des opérations comprenant :
afficher un bloc de texte dans une application d'édition de texte ;
afficher, à proximité du bloc de texte, une interface de commande d'alignement ou une interface de commande de flottement une fois qu'une précondition est satisfaite ;
détecter un mouvement de glissement associé à l'interface de commande d'alignement ou à l'interface de commande de flottement, le mouvement de glissement changeant une position de l'interface de commande d'alignement ou de l'interface de commande de flottement par rapport au bloc de texte ;
modifier un alignement ou une position du bloc de texte sur la base, au moins en partie, du mouvement de glissement détecté, la modification de l'alignement du bloc de texte sur la base du mouvement de glissement détecté comprenant la modification de l'alignement du bloc de texte sur la base de la position de l'interface de commande d'alignement par rapport au bloc de texte, et la modification de la position du bloc de texte sur la base du mouvement de glissement détecté comprenant la modification de la position du bloc de texte sur la base de la position de l'interface de commande de flottement par rapport au dispositif d'affichage ;
détecter une fin du mouvement de glissement ; et
afficher, dans une position prédéterminée associée à l'alignement ou à la position du bloc de texte, l'interface de commande d'alignement ou l'interface de commande de flottement.

8. Dispositif électronique selon la revendication 7, dans lequel la précondition est satisfaite, sauf si, pendant une période de temps prédéterminée, l'une des opérations suivantes se produit :
recevoir une entrée reflétant le placement d'un signe d'intercalage dans un bloc de texte ;
recevoir une entrée reflétant le repositionnement du signe d'intercalage ;
recevoir une entrée de caractère ; ou
détecter une entrée reflétant la sélection d'une application en dehors de l'application d'édition de texte.

9. Dispositif électronique selon la revendication 8, dans lequel la période de temps prédéterminée est de 300 millisecondes.

10. Dispositif électronique selon l'une quelconque des revendications 7 à 9, dans lequel la modification de l'alignement du bloc de texte comprend le réglage de l'alignement du bloc de texte pour être aligné à gauche, centré ou aligné à droite.

11. Dispositif électronique selon l'une quelconque des revendications 7 à 10, dans lequel la modification de la position du bloc de texte comprend le réglage du bloc de texte pour être en flottement à gauche, en flottement au centre ou en flottement à droite.
